# EUROPÄISCHE PATENTSCHRIFT

(11) **EP 1 090 213 B1**
(45) Veröffentlichungstag und Bekanntmachung des Hinweises auf die Patenterteilung: **10.07.2002**
(21) Anmeldenummer: 99923431.3
(22) Anmeldetag: 21.04.1999
(51) Int. Cl.: F01N 3/28

(54) **FASERMATTE**
FIBER MAT
MAT DE FIBRES

(30) Priorität: 30.06.1998 DE 19829110
(43) Veröffentlichungstag der Anmeldung: 11.04.2001
(73) Patentinhaber: J. Eberspächer GmbH & Co., 73730 Esslingen (DE)
(72) Erfinder: WIRTH, Georg, D-73230 Kirchheim (DE); ZACKE, Peter, D-73095 Albershausen (DE); WOERNER, Siegfried, D-73734 Esslingen (DE)
(86) Internationale Anmeldenummer: EP9902684
(87) Internationale Veröffentlichungsnummer: WO0000722

(56) Entgegenhaltungen:
- EP-A- 0 361 796
- EP-A- 0 824 184
- DE-C- 3 514 150
- US-A- 3 949 109
- US-A- 4 484 459

## Beschreibung

Die Erfindung betrifft eine Fasermatte, insbesondere aus gegenüber Hitze und thermischen Wechselbeanspruchungen beständigem Material und insbesondere geeignet zur Halterung von keramischen Monolithen in pulsationsbelasteten Abgasanlagen von Motoren mit interner Verbrennung, z.B. Motoren von Kraftfahrzeugen.

Bei heutigen Kraftfahrzeugen werden die Abgase der zum Antrieb der Fahrzeuge dienenden Verbrennungsmotoren regelmäßig katalytisch nachbehandelt, um besonders schädliche Bestandteile der Abgase in weniger schädliche Stoffe umzuwandeln. Dafür typische Katalysatoranordnungen bestehen aus einem keramischen Monolithen, welcher eine große Vielzahl von engen Abgaskanälen aufweist, der Wandungen mit katalytisch wirksamem Material, in der Regel Platin, Palladium oder Rhodium, belegt sind, so daß das diese Kanäle durchsetzende Abgas praktisch vollständig in Wechselwirkung mit dem Katalysatormaterial treten kann.

Der keramische Monolith bzw. die keramischen Monolithe sind regelmäßig in Metallgehäusen untergebracht, wobei der jeweilige keramische Monolith mittels einer mehr oder weniger ausgeprägt nachgiebigen Matte gelagert wird, die innerhalb eines Ringspaltes zwischen einer Außenumfangsfläche des keramischen Monolithes und einer Gehäuseinnenwandung angeordnet ist und den Monolith im wesentlichen durch Reibung festhält. Diese Lagermatte soll darüber hinaus unvermeidbare Herstellungstoleranzen von Keramik-Monolith und Metallgehäuse sowie die unterschiedlichen thermischen Expansionskoeffizienten von Gehäuse und Monolith ausgleichen. Dabei kann die Lagermatte hohen Wechselbelastungen ausgesetzt sein, weil einerseits die Abgastemperaturen im Vergleich zur normalen Temperatur der Atmosphäre außerordentlich hohe Werte erreichen und andererseits durch Spritzwasser auf regennassen Fahrbahnen oder in Waschanlagen eine extreme Abkühlung des Gehäuses gegenüber dem keramischen Monolith auftreten kann. Hinzu kommt, daß der Abgasstrom mit ausgeprägten Pulsationen behaftet ist, die Schwingungen der Wandung des Metallgehäuses anregen und den keramischen Monolith auf der Abgas-Zustromseite ständig pulsierend belasten.

Derzeit sind Lagermatten für keramische Monolithe in Abgasanlagen meist als "möglichst wirre" Drahtgewirke und/oder als sogenannte Blähmatten ausgebildet, die unter Hitze aufblähende Glimmerpartikel und keramische Bestandteile, insbesondere in Faserform, enthalten können.

Gattungsgemäße Fasermatten sind z. B. aus der US 4,484,459 und der EP 0 361 796 A2 bekannt.

Aufgabe der Erfindung ist es nun, zur Lagerung keramischer Monolithe in Abgasanlagen geeignete Fasermatten mit besonders hoher Belastbarkeit und ausgeprägter Dauerelastizität zu schaffen.

Diese Aufgabe wird erfindungsgemäß durch die Merkmale in Anspruch 1 gelöst.

Die Erfindung beruht auf dem allgemeinen Gedanken, die Fasermatte als Fasergelege mit überwiegend geordneten Fasern auszubilden, und zwar derart, daß zwei einander berührende Fasern benachbarter Schichten auf ihrem vom jeweiligen Berührungspunkt abgewandten Seiten erst in einem gewissen Abstand auf einer Faser oder Fasern anderer Schichten aufliegen. Dies ist im Ergebnis gleichbedeutend damit, daß in Dikkenrichtung der Matte, das heißt senkrecht zur Mattenebene, mehr oder weniger häufig Berührungspunkte und Freiräume alternierend aufeinander folgen. Damit kann eine Faser an einem Berührungspunkt regelmäßig in Richtung eines dem Berührungspunkt bezüglich der Faserachse diametral gegenüberliegenden Freiraums nachgeben, so daß die Berührungspunkte zumindest überwiegend an bei Belastung unter Biegung nachgebenden Faserbereichen liegen. Diese Faserbereiche ähneln also biegbaren "Balken", die beiderseits eines in einer Richtung belasteten Berührungspunktes zur Abstützung gegen diese Last gelagert sind.

Gemäß einer bevorzugten Ausführungsform der Erfindung liegt der Faserdurchmesser zwischen etwa 3 bis 15 um, wobei Faserdurchmesser von zumindest 5 um bevorzugt sind, um bei gegebenenfalls auftretenden kleinen Bruchstücken Reizungen der menschlichen Haut zu vermeiden und darüber hinaus zu verhindern, daß die Faserbruchstücke mit hoher Wahrscheinlichkeit eingeatmet werden können. Im Falle von Lagermatten für keramische Monolithe sind als Fasermaterialien glasige oder keramische Metalloxide im Hinblick auf ihre hohe thermische Belastbarkeit bevorzugt. Dabei handelt es sich zwar regelmäßig um an sich außerordentlich spröde Materialien. Aufgrund des erfindungsgemäß vorgesehenen Fasergeleges sowie der geringen Faserdurchmesser kann jedoch gleichwohl eine hohe Dauerelastizität in Dickenrichtung der Matte gewährleistet werden.

Gegebenenfalls kann zumindest ein Teil der Faserschichten aus wellenförmigen oder gewendelten Fasern bestehen. Dadurch besteht einerseits die Möglichkeit, die Abstände zwischen den Abstützpunkten an einer Faser zu verlängern. Andererseits kann mit derartigen Fasern vergleichsweise leicht gewährleistet werden, daß innerhalb einer Faserschicht regelmäßig Freiräume verbleiben, die für Biegebewegungen von Fasern benachbarter Schichten ausnutzbar sind.

Bei Preßbelastung werden die Fasern des Fasergeleges mehr oder weniger wellenförmig verbogen. Dies führt an sich zu einer entsprechenden Zugbelastung der Fasern und/oder zu einer Verkürzung der Matte in Längs- und Querrichtung. Dieser Effekt kann dadurch kompensiert werden, daß die Fasern der Matte im unbelasteten und unverspannten Zustand eine - vorzugsweise unregelmäßige - Wellenform mit relativ großer Raumwellenlänge und vergleichsweise kleiner Raumamplitude aufweisen. Damit können sich die Fasern bei Preßung der Matte etwas "strecken", ohne stark auf Zug belastet zu werden.

Durch Verklebung und/oder Hilfsfäden kann die Ordnung des Fasergeleges der Matte vor deren Einbau oder Einsatz fixiert werden. Insbesondere besteht dabei die Möglichkeit, die Faserlagen in Dickenrichtung der Matte mit den Hilfsfäden bzw. der Verklebung unter Vorspannung zu halten. Mit derartigen Maßnahmen kann der Einsatz bzw. Einbau der Matte deutlich erleichtert werden.

Wenn die Hilfsfäden bzw. die Verklebung aus einem Material bestehen, welches sich unter Erwärmung (oder durch andere Maßnahmen) löst, können die von der Matte nach dem Einbau in einem Spalt erzeugten Preßkräfte durch Lösung der Hilfsfäden oder der Verklebung erhöht werden.

Im übrigen wird hinsichtlich bevorzugter Merkmale der Erfindung auf die Ansprüche sowie die nachfolgende Erläuterung der Zeichnung verwiesen anhand der besonders bevorzugte Ausführungsformen der Erfindung näher beschrieben werden.

Dabei zeigt
- Fig. 1: eine ausschnittsweise perspektivische Ansicht mehrerer aufeinanderliegender Schichten einer Fasermatte,
- Fig. 2: ein Schnittbild einer entsprechenden Fasermatte in unbelastetem Zustand,
- Fig. 3: ein der Fig. 2 entsprechendes Schnittbild der Fasermatte bei Belastung,
- Fig. 4: eine perspektivische, ausschnittsweise Ansicht dreier Faserschichten einer Ausführungsform, bei der die Faserschichten abwechselnd aus gewellten und geraden Fasern bestehen,
- Fig. 5: eine perspektivische, ausschnittsweise Darstellung einer Fasermatte, deren Faserschichten aus gewendelten Fasern bestehen,
- Fig. 6: eine schematisierte Draufsicht auf drei Faserebenen, die jeweils aus schwach gewellten Fasern bestehen, und
- Fig. 7: ein Diagramm, welches die Pressung einer Fasermatte in Abhängigkeit der Höhe eines von der Fasermatte ausgefüllten Spaltes wiedergibt.

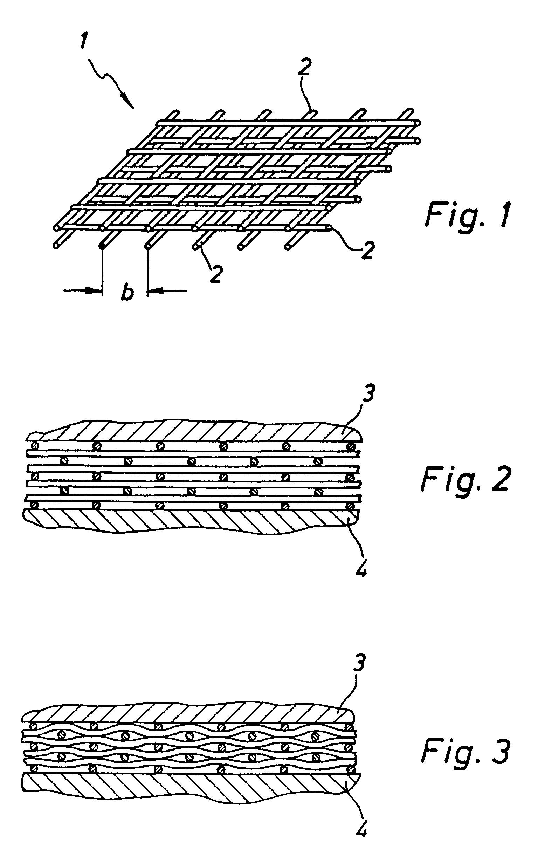

Gemäß Fig. 1 besteht eine Fasermatte 1 aus einer Vielzahl übereinander angeordneter Faserschichten mit jeweils zueinander parallelen Fasern 2. In jeder Schicht sind die Fasern voneinander um ein Maß b voneinander beabstandet, wobei die Fasern von miteinander unmittelbar benachbarten Schichten quer zueinander ausgerichtet sind. Die Fasern 2 von zwei Schichten, die beidseitig einer dazwischen liegenden Schicht angeordnet sind, beispielsweise die Fasern der in Fig. 1 ersten und dritten Schicht von unten, liegen zwar zueinander parallel, sind jedoch in Draufsicht auf die Schichten zueinander auf Lücke angeordnet. Damit liegt der Berührungspunkt einer Faser 2 einer Zwischenschicht mit einer Faser 2 der einen Nachbarschicht regelmäßig entfernt von benachbarten Berührungspunkten der vorgenannten Fasern mit Fasern 2 der anderen Nachbarschicht.

Wenn nun die Fasermatte 1 gemäß den Fig. 2 und 3 zwischen den Wänden 3 und 4 eines Spaltes mit variabler Breite angeordnet ist, tritt bei Verengung des Spaltes gemäß Fig. 3 eine weitestgehend regelmäßige wellenförmige Verformung aller Fasern 2 auf, mit Ausnahme der Fasern der beiden den Wänden 3 und 4 unmittelbar benachbarten Faserschicht.

Im Falle einer Fasermatte 1 zur Halterung keramischer Monolithe in Abgasanlagen können die Fasern 2 aus thermisch hochbelastbaren sowie auch thermischen Wechselbeanspruchungen standhaltenden Fasern aus keramischen Materialien bestehen, beispielsweise aus Metalloxiden wie Aluminiumoxid, Siliziumoxid, Boroxid, Zirkonoxid, Hafniumoxid oder Mischkristallen aus diesen Materialien bzw. aus Siliciumcarbid und Siliciumnitrid. Bei diesen Materialien sind vorzugsweise Faserdurchmesser von etwa 5 um vorgesehen, wobei die Anzahl der Faserschichten ein Vielfaches von 100 betragen kann.

Bei derart vielen Faserschichten und den angegebenen geringen Faserdurchmessern bewirkt die Fasermatte 1 im Spalt zwischen den Wänden 3 und 4 in den Fig. 2 und 3 einen außerordentlich hohen Drosselwiderstand gegenüber Gasen, die den Spalt parallel zu den Wänden 3 und 4 zu durchsetzen suchen. Darüber hinaus wird aufgrund der hohen Faserzahl pro Volumeneinheit eine gute Abschirmung gegenüber Wärmestrahlung und aufgrund der vielen kleinen Freiräumen zwischen den Fasern 2 eine gute thermische Isolierung der Wände 3 und 4 voneinander erreicht.

Wird die Fasermatte zur Lagerung eines keramischen Monolithes in Abgasanlagen eingesetzt, wird also der Spalt zwischen dem Monolith und der den Monolith umschließenden Gehäusewand weitestgehend gasdicht abgesperrt, darüber hinaus werden der Monolith und die Gehäusewand voneinander thermisch wirksam getrennt.

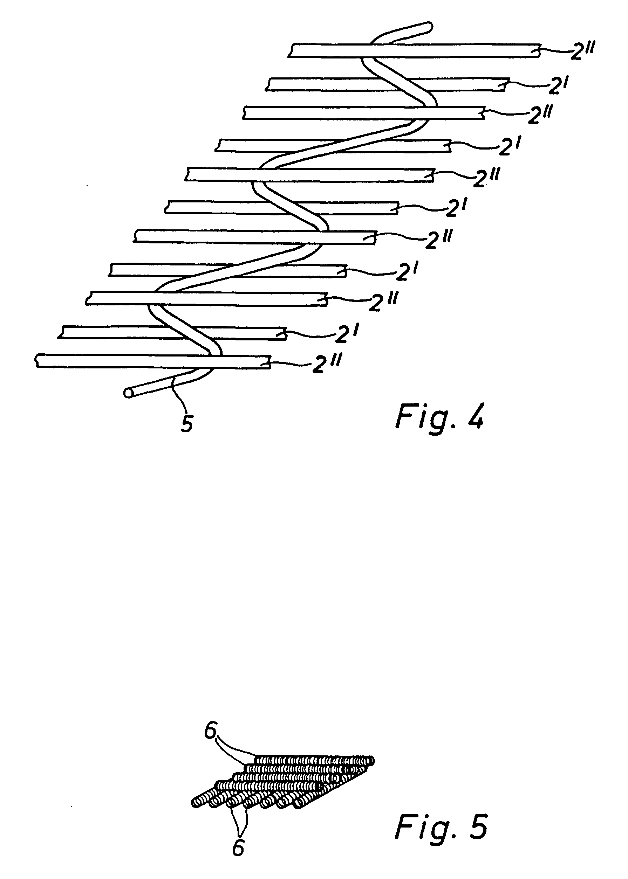

Bei der Ausführungsform der Fig. 4 ist zwischen zwei Faserschichten mit zueinander parallelen, jedoch parallel versetzen Fasern 2' bzw. 2'' jeweils eine Schicht mit wellenförmigen Fasern 5 angeordnet, wobei die Fasern 5 jeweils eine in Schichtebene liegende ebene Welle mit einer Raumwellenlänge bilden, die dem doppelten Abstand von Nachbarnfasern 2' bzw. von Nachbarnfasern 2'' entspricht. Dabei liegen die Fasern 2'' vorzugsweise so, daß sie die wellenförmigen Fasern 5 jeweils etwa an den Extrempunkten der Welle kreuzen, während die Fasern 2'' die wellenförmigen Fasern jeweils im Bereich der Krümmungswechsel berühren.

Durch diese Konfiguration werden die wellenförmigen Fasern 5 bei Druckbelastung der Fasermatte auf Biegung und Torsion beansprucht. Darüber hinaus liegen in Faserrichtung aufeinander folgende Berührungspunkte einer Faser 5 mit Nachbarnfasern 2' und 2'' voneinander relativ weit beabstandet. Dadurch kann die Wahrscheinlichkeit von Faserbrüchen vermindert werden.

Bei der Ausführungsform der Fig. 5 bestehen die Faserschichten jeweils aus röhrenförmigen Faserwendeln 6, wobei die Faserwendel einer Schicht jeweils quer zur Richtung der Faserwendeln der benachbarten Schicht angeordnet sein können. Eine solche Fasermatte zeichnet sich durch hohe Biegefähigkeit aus. Darüber hinaus wird eine gute Elastizität in Dickenrichtung gewährleistet, weil die Faserwendeln 6 einerseits quer zur Wendelachse elastisch gequetscht werde können und andererseits zumindest bei Faserwendeln 6 mit größerer Steigung die Möglichkeit besteht, daß benachbarte Faserwendeln 6 bzw. die Faserwendeln 6 benachbarten Schichten ineinander gedrückt werden.

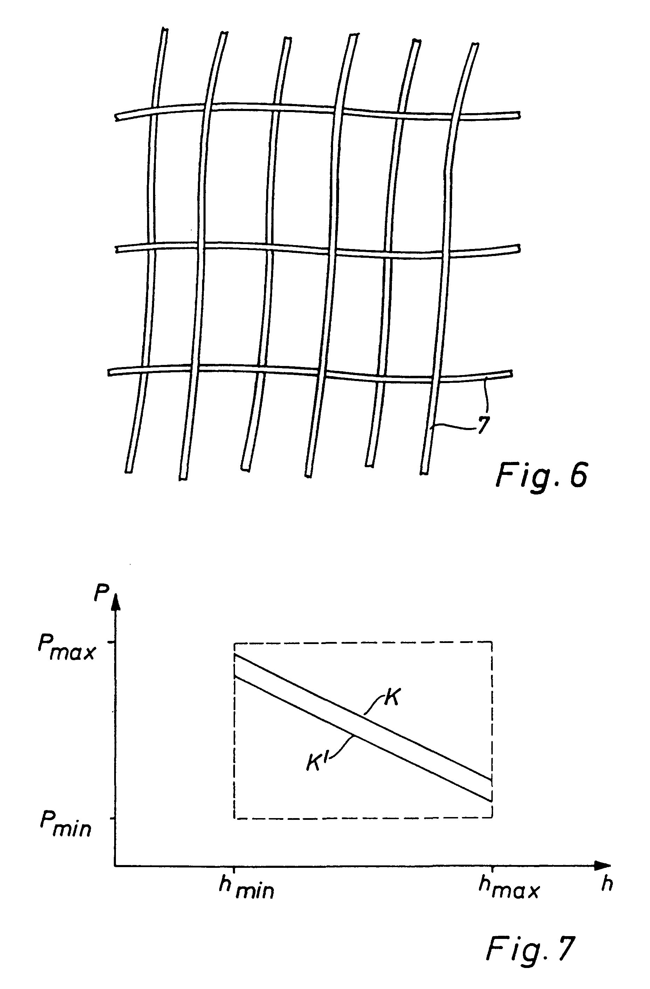

Gemäß Fig. 6 können die Faserschichten jeweils aus schwach gewellten Fasern 7 bestehen, deren Raumwellenlänge deutlich größer als der doppelte Querabstand der Fasern 7 der jeweiligen Nachbarschicht ist. Durch derartige gewellte Fasern 7 läßt sich auch bei geringer Exaktheit in der Durchführung der Verlegung der Fasern 7 mit hoher Wahrscheinlichkeit erreichen, daß die Fasern zweier zu einer Zwischenschicht unmittelbar benachbarter Faserschichten in Querrichtung zueinander versetzte Berührungspunkte mit den Fasern der Zwischenschicht aufweisen und somit im Bereich eines Berührungspunktes von zwei unterschiedlichen Schichten zugehörigen Fasern 7 auf der vom jeweiligen Berührungspunkt abgewandten Seite einer Faser 7 ein für Verbiegungen dieser Faser 7 nutzbarer Freiraum vorliegt.

Durch die Welligkeit der Fasern läßt sich bei deren Verlegung relativ leicht erreichen, daß zwischen benachbarten Fasern einer Schicht ein mittlerer Abstand verbleibt bzw. nur punktförmige Berührungen erfolgen.

Die bevorzugt unregelmäßige Welligkeit der Fasern kann bevorzugt eine Raumwellenlänge im Bereich des 100-fachen bis 500-fachen Maßes des Faserdurchmessers aufweisen. Die Raumamplitude der Welligkeit liegt bevorzugt beim 10-fachen bis 100-fachen Maß des Faserdurchmessers.

Die Fig. 7 zeigt ein Diagramm, welches die Pressung P einer Fasermatte in Abhängigkeit von der Höhe h eines von der Fasermatte ausgefüllten Spaltes wiedergibt, wobei die Fasermatte eine Struktur ähnlich der Fig. 1 aufweist. Innerhalb eines durch punktierte Linie umrahmten nutzbaren Bereiches ergibt sich eine weitestgehend lineare Kompressionskennlinie K, welche sich aufgrund unvermeidlicher Faserbrüche im Laufe der Zeit in Richtung einer im wesentlichen zur Kompressionskennlinie K parallelen Kennlinie K' verschiebt. Die Steilheit der Kennlinien K bzw. K' wird durch die Querabstände der Fasern 2 innerhalb der Faserschichten sowie den Faserdurchmesser und des Fasermaterial bestimmt. Engere Querabstände sowie vergrößerte Faserdurchmesser führen zu einer größeren Steilheit der Kennlinien K bzw. K'.

Im Falle einer Fasermatte zur Lagerung eines keramischen Monolithes wird der nutzbare Bereich für die Pressung nach unten durch die Mindestpressung Pₘᵢₙ begrenzt, die notwendig ist, um einen zur Fixierung des Monolithes ausreichenden Reibschluß zwischen Fasermatte und Monolith bzw. zwischen Fasermatte und Gehäuse des Monolithes zu bewirken. Nach oben wird der nutzbare Bereich bei der Pressung durch die für den Monolith maximal zulässige Pressung Pₘₐₓ begrenzt, oberhalb der Brüche des Monolithes zu erwarten sind.

Hinsichtlich der Spalthöhe h muß einerseits gewährleistet sein, daß der Wert hₘᵢₙ nicht unterschritten wird, unterhalb dessen übermäßig viele Faserbrüche durch starke Quetschung der Fasermatte erwartet werden müssen. Andererseits soll die Spalthöhe den Wert hₘₐₓ nicht überschreiten, oberhalb dessen die Fasern der Faserschichten nur noch geringfügig auf Biegung beansprucht werden, so daß bei zunehmender Spälthöhe nur noch eine progressiv abnehmende Pressung erwartet werden kann.

Bei der Herstellung der Fasermatten können grundsätzlich aus der Webtechnik bekannte Verfahren eingesetzt werden.

Um ein Verrutschen der Fasern einer unbelasteten Fasermatte zu vermeiden können Kleber eingesetzt werden, mit denen die Fasern vor ihrer Verlegung zur Fasermatte benetzt werden.

Im Falle einer zur Lagerung keramischer Monolithe in Abgasanlagen dienenden Fasermatte können bevorzugt ausbrennbare Kleber eingesetzt werden, beispielsweise auf der Basis von Stärke- oder Polyvinylacetat bzw. Acrylaten.

Gegebenenfalls kann die Verklebung der Fasern miteinander in einem vorgespannten Zustand der Fasermatte erfolgen.

Zwar ist es grundsätzlich hinsichtlich der Festigkeit und Belastbarkeit der Matte vorteilhaft, wenn die Fasern von Mattenrand zu Mattenrand ohne Unterbrechung durchlaufen. Da jedoch im Falle einer Lagermatte für keramische Monolithe in Abgasanlagen von Verbrennungsmotoren die Festigkeit der Matte in Längs- und Querrichtung nur eine untergeordnete Bedeutung hat und im wesentlichen nur die Belastbarkeit der Matte senkrecht zur Mattenebene von Wichtigkeit ist, kann das die Matte bildende Fasergelege auch aus vielen relativ kurzen Faserstücken bestehen, die dann entsprechend den Darstellungen in den Fig. 1 bis 6 angeordnet bzw. ausgebildet sind.

Da die erfindungsgemäße Fasermatte aus einem Fasergelege besteht ist es vergleichsweise leicht möglich, die Fasermatte bereichsweise mit unterschiedlichen Schichtzahlen auszubilden, um beispielsweise bei der Lagerung eines keramischen Monolithes in einem zugehörigen Gehäuse einer Abgasanlage an besonders nachgiebigen Bereichen der Gehäusewandung ein Abheben der Gehäusewand von der Lagermatte zu vermeiden. Dies kann insbesondere dann wichtig sein, wenn der keramische Monolith und das zugehörige Gehäuse einen unrunden Querschnitt mit bereichsweise stark gekrümmten und bereichsweise schwach gekrümmten Teilstücken aufweisen. An den schwach gekrümmten Zonen kann die Gehäusewandung vergleichweise große Federhügel ausführen, die zu einer entsprechend starken Veränderung der Spalthöhe führen. Wenn die Lagermatte in derartigen Bereichen eine erhöhte Schichtzahl besitzt, kann überall eine feste Lagerung des Monolithes sowie eine gute Dämpfung der Wandschwingungen und eine gute Abdichtung des Spaltes gewährleistet werden.

Grundsätzlich ist es auch möglich, die Netz- und Raumgitterstruktur der Fasermatte bzw. der Faserschichten in Längs-, Quer- und Dickenrichtung der Matte durch Hilfsfasern zu fixieren, die beispielsweise zick-zack-förmig in die Netzstruktur eingewoben werden können. Allerdings soll die Dichte der Hilfsfasern vergleichsweise gering sein, um die auf Elastizität der Fasermatte ausgelegte Netzstruktur möglichst wenig zu stören.

Ebenso können zur Herstellung ausbrennbare Hilfsfasern als Abstandshalter oder Bindemittel aus unter Wärme erweichenden Kunststoffen zwischen die Fasern der Matte eingelegt bzw. eingewoben werden. Derartige Hilfsfasern können thermisch an die Keramikfasern angeklebt oder als Lagefixierung für die Keramikfasern in die Mattenstruktur eingeschmolzen sein. Eventuell können die Hilfsfasern dicker als die Keramikfasern sein. Als derartige Hilfsfasern eignen sich beispielsweise Acryl-, Polyethylen- und/oder Polyamidfasern.

Bei den obigen Ausführungsbeispielen sind teilweise Fasern vorgesehen, die im unbelasteten Zustand eine mehr oder weniger ausgeprägte Welligkeit aufweisen. Die Herstellung dieser Fasern bzw. die Erzeugung der Welligkeiten kann durch Druckpulsation bei der Extrusion der Fasern, durch eine pulsierende Zugkraft beim Strecken des Faserrohlings, durch unsymmetrische Düsen bei oszillierend veränderter Durchtrittsgeschwindigkeit des Fasermaterials und/oder durch oszillierende Ablenkung des Faserrohlings beim Erstarren des Fasermaterials erfolgen. Grundsätzlich ist es auch möglich, die Faserrohlinge durch thermische oder chemische Prozesse alternierend zu verändern, um die Wellenform zu erreichen. Um die Fasern zur Erzeugung der Fasergelege geordnet abzulegen, können die Fasern bei der Ablage durch Kämme oder dergleichen geführt werden. Zusätzlich oder alternativ können die Fasern auch durch laminare Luftschleier oder Luftstrahlen geführt werden.

Bei allen Ausführungsformen der Erfindung ist es grundsätzlich vorteilhaft, die Fasern der Fasermatte durch Hilfsmaßnahmen, wie z.B. durch Hilfsfäden oder Verklebung, bis zum Einsatz bzw. Einbau der Matte zu fixieren. In besonders bevorzugter Weise ist vorgesehen, diese Fixierung so auszubilden, daß die Matte einer größeren Vorspannung in Dickenrichtung ausgesetzt wird. Bei Einsatz von Hilfsfäden können beispielsweise die Faserschichten miteinander unter Vorspannung "versteppt" werden. Wenn die zur Fixierung der Fasern eingesetzten Materialien thermisch oder in anderer Weise lösbar sind, besteht die Möglichkeit, das Fixiermaterial nach Montage bzw. Einbau der Matte zu entfernen, so daß die von der Matte in einem Spalt oder dergleichen erzeugten Preßkräfte deutlich erhöht werden. Gleichzeitig wird aufgrund dieser Maßnahmen erreicht, daß sich die Matte besonders leicht im Spalt oder dergleichen anordnen läßt, weil die Preßkräfte zwischen der Matte und den Wänden des Spaltes zunächst gering gehalten werden, solange die Fixierung der Faserschichten unter Vorspannung wirksam bleibt.

Die erfindungsgemäßen Fasermatten sind zwar bevorzugt als Lagermatten für keramische Monolithe in Abgasanlagen von Verbrennungsmotoren vorgesehen. Dementsprechend bestehen die Fasern bevorzugt aus thermisch hochbelastbaren Materialien, wie oben ausgeführt wurde.

Jedoch sind auch andere Einsatzfälle für die erfindungsgemäßen Matten denkbar. Diese Matten sind immer dann von Vorteil, wenn es auf hohe Elastizität bei Preßbelastung der Matte ankommt. Damit sind die erfindungsgemäßen Matten beispielsweise auch zur Lagerung vibrierender Maschinen geeignet.

## Patentansprüche

1. Fasermatte aus gegenüber Hitze und thermischen Wechselbeanspruchungen beständigem Material, mit in geordneten Schichten angordneten Fasern,
**dadurch gekennzeichnet,**
**daß** sie als Lagermatte zur Lagerung eines keramischen Monolithen in pulsationsbelasteten Abgasanlagen von Brennkraftmaschinen verwendet ist, wobei die Fasern (2, 5, 6, 7) einer Schicht quer zu den Fasern der Nachbarschicht bzw. Nachbarschichten verlaufen und jede Faser einer zwischen zwei Nachbarschichten liegenden Zwischenschicht auf den Fasern jeder Nachbarschicht an einer Vielzahl von Berührungspunkten aufliegt, deren Abstände voneinander im Mittel größer als der Faserdurchmesser ist, und die Berührungspunkte der Faser mit den Fasern der einen Nachbarschicht - zumindest überwiegend - versetzt zu den Berührungspunkten mit den Fasern der anderen Nachbarschicht liegen.

2. Fasermatte nach Anspruch 1,
**dadurch gekennzeichnet,**
**daß** die Abstände der Berührungspunkte voneinander bei einem Vielfachen der Faserdurchmesser liegen.

3. Fasermatte nach Anspruch 1 oder 2,
**dadurch gekennzeichnet,**
**daß** die Dicke der Fasermatte um mehrere Größenordnungen im Bereich mehrerer Potenzen der Zahl 10 größer als der Faserdurchmesser ist.

4. Fasermatte nach einem der Ansprüche 1 bis 3,
**dadurch gekennzeichnet,**
**daß** zumindest die Fasern jeder zweiten Schicht wellenförmig ausgebildet sind.

5. Fasermatte nach Anspruch 4,
**dadurch gekennzeichnet,**
**daß** die Schichten abwechselnd etwa geradlinige und wellenförmige Fasern aufweisen, wobei die geradlinigen Fasern auf der einen Seite der Schicht aus wellenförmigen Fasern im Bereich der Wellen-Extrempunkte an den wellenförmigen Fasern anliegen, während die geradlinigen Fasern der anderen Nachbarschicht der Schicht aus wellenförmigen Fasern an den Krümmungswechselpunkten der wellenförmigen Fasern anliegen.

6. Fasermatte nach einem der Ansprüche 1 bis 5,
**dadurch gekennzeichnet,**
**daß** die Fasern, zumindest einiger Schichten, schraubenförmig gewendelt sind.

7. Fasermatte nach einem der Ansprüche 1 bis 6,
**dadurch gekennzeichnet,**
**daß** der Abstand zwischen parallelen Fasern einer Faserlage derart eingestellt ist, daß eine maximal zulässige Zugspannung innerhalb der Fasern erreicht wird, sobald die Fasern durch Biegebeanspruchung an der nächsten Faserlage mit gleicher Faserrichtung anliegen.

8. Fasermatte nach einem der Ansprüche 1 bis 7,
**dadurch gekennzeichnet,**
**daß** die Fasern bzw. Faserebenen der Matte bei der Montage durch ausbrennbare Hilfsfäden oder ausbrennbaren Kunststoff-Kleber bis zum Einbau bzw. Einsatz der Matte unter Verspannung in sich geometrisch fixiert sind.

9. Fasermatte nach einem der Ansprüche 1 bis 8,
**dadurch gekennzeichnet,**
**daß** die Fasern bzw. Faserebenen der Matte unter Preßvorspannung der Matte miteinander verklebt sind, und daß die Verklebung unter Erwärmung lösbar ist.

10. Fasermatte nach einemd der Ansprüche 1 bis 9,
**dadurch gekennzeichnet,**
**daß** die Dicke der Fasern zwischen 3 und 15 m liegt.

11. Fasermatte nach Anspruch 10,
**dadurch gekennzeichnet,**
**daß** der Durchmesser der Fasern einen Wert von ca. 5 m hat.

12. Fasermatte nach einem der Abnsprüche 1 bis 11,
**dadurch gekennzeichnet,**
**daß** die Fasern aus glasigem bzw. keramischem Material, insbesondere aus Metalloxiden, wie z.B. Aluminiumoxid, Siliziumoxid, Bohroxid, Zirkonoxid und Hafniumoxid, bzw. aus Mischkristallen von Metalloxiden und/oder Siliziumkarbid und/oder Siliziumnitrid bestehen.

## Claims

1. Fibre mat comprising material resistant to heat and thermal cycling, having fibres arranged in ordered layers, **characterized in that** it is used as a bearing mat for mounting a ceramic monolith in internal combustion engine exhaust systems for pulsating loads, the fibres (2, 5, 6, 7) of a layer running transversely to the fibres of the adjacent layer or adjacent layers and each fibre of an intermediate layer present between two adjacent layers resting on the fibres of each adjacent layer at a multiplicity of contact points whose distance from one another is on average greater than the fibre diameter, and the contact points of the fibres with the fibres of an adjacent layer being - at least predominantly - offset with respect to the contact points of the fibres of the other adjacent layer.

2. Fibre mat according to Claim 1, **characterized in that** the distances between the contact points are a multiple of the fibre diameter.

3. Fibre mat according to Claim 1 or 2, **characterized in that** the thickness of the fibre mat is several orders of magnitude in the region of several powers of the number 10 greater than the fibre diameter.

4. Fibre mat according to any of Claims 1 to 3, **characterized in that** at least the fibres of each second layer are wavy.

5. Fibre mat according to Claim 4, **characterized in that** the layers have approximately linear and wavy fibres alternately, the linear fibres resting against the wavy fibres on one side of the layer of wavy fibres in the region of the extreme points of the waves, while the linear fibres of the other layer adjacent to the layer of wavy fibres rest against the inflexion points of the wavy fibres.

6. Fibre mat according to any of Claims 1 to 5, **characterized in that** the fibres, at least of some layers, are coiled helically.

7. Fibre mat according to any of Claims 1 to 6, **characterized in that** the distance between parallel fibres of a fibre layer is established in such a way that a maximum permissible tensile stress is reached within the fibres as soon as the fibres rest against the next fibre layer with the same fibre direction as a result of bending stress.

8. Fibre mat according to any of Claims 1 to 7, **characterized in that** the fibres or fibre planes of the mat are geometrically restrained during mounting by auxiliary filaments which can be burnt off or plastic adhesive which can be burnt off until installation or use of the mat.

9. Fibre mat according to any of Claims 1 to 8, **characterized in that** the fibres or fibre planes of the mat are adhesively bonded to one another with initial stress of the mat under pressure, and **in that** the adhesive bond can be eliminated by heating.

10. Fibre mat according to any of Claims 1 to 9, **characterized in that** the thickness of the fibres is between 3 and 15 µm.

11. Fibre mat according to Claim 10, **characterized in that** the diameter of the fibres has a value of about 5 µm.

12. Fibre mat according to any of Claims 1 to 11, **characterized in that** the fibres consist of glassy or ceramic material, in particular of metal oxides, such as, for example, alumina, silica, boron oxide, zirconium oxide and hafnium oxide, or of solid solutions of metal oxides and/or silicon carbide and/or silicon nitride.

## Revendications

1. Mat de fibres en matériau résistant à la chaleur et aux contraintes alternées thermiques, comprenant des fibres disposées en couches ordonnées, **caractérisé en ce qu'**il est utilisé en tant que mat de support pour le support d'un monolithe céramique dans des installations d'échappement de moteurs à combustion interne à pulsations, les fibres (2, 5, 6, 7) d'une couche s'étendant transversalement aux fibres de la couche voisine ou des couches voisines, et chaque fibre d'une couche intermédiaire se trouvant entre deux couches voisines reposant sur les fibres de chaque couche voisine en une pluralité de points de contact dont les distances les uns des autres sont en moyenne supérieures au diamètre des fibres, et les points de contact de la fibre avec les fibres d'une couche voisine sont au moins essentiellement décalés par rapport aux points de contact avec les fibres de l'autre couche voisine.

2. Mat de fibres selon la revendication 1, **caractérisé en ce que** les distances entre les points de contact correspondent à un multiple du diamètre des fibres.

3. Mat de fibres selon la revendication 1 ou 2, **caractérisé en ce que** l'épaisseur du mat de fibres est supérieure au diamètre des fibres de plusieurs ordres de grandeurs dans le domaine de plusieurs puissances de 10.

4. Mat de fibres selon l'une quelconque des revendications 1 à 3, **caractérisé en ce qu'**au moins les fibres de chaque deuxième couche sont réalisées avec une forme ondulée.

5. Mat de fibres selon la revendication 4, **caractérisé en ce que** les couches présentent en alternance des fibres approximativement droites et des fibres de forme ondulée, les fibres droites reposant sur les fibres de forme ondulée d'un côté de la couche de fibres de forme ondulée dans la région des points extrêmes des ondulations, tandis que les fibres droites de l'autre couche voisine de la couche de fibres de forme ondulée reposent sur les points de changement de courbure des fibres de forme ondulée.

6. Mat de fibres selon l'une quelconque des revendications 1 à 5, **caractérisé en ce que** les fibres d'au moins quelques couches sont tordues en hélice.

7. Mat de fibres selon l'une quelconque des revendications 1 à 6, **caractérisé en ce que** la distance entre des fibres parallèles d'une couche de fibres est ajustée de telle sorte qu'une tension de traction admissible maximale soit atteinte à l'intérieur des fibres, dès que les fibres s'appliquent avec la même orientation des fibres par sollicitation de flexion contre la couche de fibres suivante.

8. Mat de fibres selon l'une quelconque des revendications 1 à 7, **caractérisé en ce que** les fibres ou les plans des fibres du mat sont fixés géométriquement en soi lors du montage par des fils auxiliaires combustibles ou par de l'adhésif synthétique combustible jusqu'à l'installation ou à l'insertion du mat sous déformation.

9. Mat de fibres selon l'une quelconque des revendications 1 à 8, **caractérisé en ce que** les fibres ou les plans des fibres du mat sont collés ensemble sous précontrainte par pression du mat, et **en ce que** le collage peut s'enlever par la chaleur.

10. Mat de fibres selon l'une quelconque des revendications 1 à 9, **caractérisé en ce que** l'épaisseur des fibres est comprise entre 3 et 15 µm.

11. Mat de fibres selon la revendication 10, **caractérisé en ce que** le diamètre des fibres a une valeur d'environ 5 µm.

12. Mat de fibres selon l'une quelconque des revendications 1 à 11, **caractérisé en ce que** les fibres se composent de matériau vitreux ou céramique, en particulier d'oxydes métalliques, comme par exemple de l'oxyde d'aluminium, de l'oxyde de silicium, de l'oxyde de bore, de l'oxyde de zircone, et de l'oxyde d'hafnium, ou bien de cristaux mixtes d'oxydes métalliques et/ou de carbure de silicium et/ou de nitrure de silicium.
